# EUROPÄISCHE PATENTANMELDUNG

(11) **EP 0 599 166 A1**
(43) Veröffentlichungstag der Anmeldung: **01.06.1994**
(21) Anmeldenummer: 93118423.8
(22) Anmeldetag: 15.11.1993
(51) Int. Cl.: F23D 14/38, B23K 7/08

(54) **Injektor-Mundstück für Brennaggregate**

(30) Priorität: 27.11.1992 DE 4239903
(71) Anmelder: FRANZ KÜNZLI AG, CH-8602 Wangen/Dübendorf (CH); UTP Schweissmaterial GmbH & Co. KG, D-79188 Bad Krozingen (DE)
(72) Erfinder: Künzli, Franz, Ch-8602 Wangen bei Dübendorf (CH); Hühne, Erwin, D-79227 Schallstadt (DE)
(74) Vertreter: Ratzel, Gerhard, Dr.

(57) **Zusammenfassung**

Es wird ein Injektor-Mundstück (10) für Brennaggregate zum Mischen von Brennkomponenten, insbesondere Brenngasen, Hilfsverbrennungsgasen und gegebenenfalls flüssigen Brennstoffen vorgeschlagen, das Zuleitungskanäle (1,2,3) für die einzelnen Brennkomponenten umfaßt. Die Zuleitungskanäle der einzelnen Brennkomponenten sind vorzugsweise jeweils durch eine Gruppe von auf einem Kreis angeordneten Achsialbohrungen gebildet, wobei die den einzelnen Brennkomponenten zugeordneten Gruppen von Achsialbohrungen auf konzentrischen Kreisen angeordnet sind. Erfindungsgemäß münden die einer ersten Brennkomponente zugeordneten ersten Zuleitungskanäle (1) in erste Injektordüsenbohrungen (11) mit vermindertem Querschnitt, welche wiederum in einen ersten Radial-Injektorspalt (6) münden. Zum Mischen der ersten Brennkomponente mit mindestens einer zweiten Brennkomponente münden die der zweiten Brennkomponente zugeordneten zweiten Zuleitungskanäle (2) ebenfalls in den ersten Radial-Injektorspalt (6). Ferner sind für mindestens eine weitere Brennkomponente Zuleitungskanäle (3) vorgesehen, mit denen eine Innen- und/oder Außenmischung der ersten, zweiten und mindestens dritten Brennkomponente realisiert ist.

## Beschreibung

Die Erfindung betrifft ein Injektor-Mundstück für Brennaggregate zum Mischen von Brennkomponenten, insbesondere Brenngasen, Hilfsverbrennungsgasen und gegebenenfalls flüssigen Brennstoffen. Das Injektor-Mundstück weist Zuleitungskanäle für die einzelnen Brennkomponenten auf, wobei die Zuleitungskanäle der einzelnen Brennkomponenten vorzugsweise jeweils durch eine Gruppe von auf einem Kreis angeordneten Achsialbohrungen gebildet sind und die den einzelnen Brennkomponenten zugeordneten Gruppen von Achsialbohrungen auf konzentrischen Kreisen angeordnet sind.

Im gesamten Bereich der Autogentechnik und der Sondergebiete zum Schneiden, Anwärmen, Flammen und Schweißen von Eisen- und Nichteisenbasiswerkstoffen sowie im Bereich des thermischen Spritzens, Flammspritzens von draht- und pulverförmigen Spritzzusatzwerkstoffen und des Hochgeschwindigkeitsflammspritzens sind spezielle Mischungen aus gasförmigen und/oder flüssigen Brennstoffen mit Hilfsverbrennungsgasen erforderlich, um spezifische Flammentemperaturen, Zünd- und Verbrennungsgeschwindigkeiten, Flammendrücke und -geschwindigkeiten zu realisieren, mit denen dann je nach Anwendungsfall bestmögliche Ergebnisse erzielt werden können.

In der Autogentechnik werden zum Schweißen und Schneiden von Eisenbasiswerkstoffen vorwiegend Acetylen als Brenngas in Verbindung mit Sauerstoff als Hilfsverbrennungsgas verwendet. Zum Flammen, Anwärmen, Weich- und Hartlöten, sowie Richten von Bauteilen aus Stahl wird auch Propangas als Brenngas in Verbindung mit Luft oder Sauerstoff als Hilfsverbrennungsgas eingesetzt.

Es ist ferner bekannt, Ethen, Acetylen oder auch Propylen als Brenngase in Verbindung mit Sauerstoff als Hilfsverbrennungsgas zu verwenden. Die Wahl des Brenngases hängt im wesentlichen von den gewünschten Betriebsparametern ab.

Die Verwendung von gasförmigen Brennstoffen ist in vielerlei Hinsicht problematisch. Acetylen beispielsweise ist als ungesättigtes Kohlenwasserstoffgas sehr reaktionsfreudig. Da die Gefahr des Acetylenzerfalls besteht, kann Acetylen beispielsweise nur bei einem maximalen Entnahmedruck von 1,5 bar aus Einzelflaschen entnommen werden. Zu der erhöhten Unfallgefahr kommmt außerdem, daß die Verwendung der vorab aufgezählten gasförmigen Brennstoffe relativ kostenintensiv ist. Außerdem lassen sich mit diesen Brennstoffen nicht die für spezielle Prozesse erforderlichen Flammeigenschaften variabel erzeugen, wie z.B. höhere Flammentemperaturen, höhere Flammengeschwindigkeiten, höhere oder niedrigere Zünd- und Verbrennungsgeschwindigkeiten, höhere Primärflammenleistungen und höhere Flammendrücke.

Der vorliegenden Erfindung liegt daher die Aufgabe zugrunde, ein Injektor-Mundstück für Brennaggregate anzugeben, welches zum Betreiben von einschlägigen Verbrauchsgeräten, wie z.B. Schneidbrennern, Anwärm- und Flammbrennern, Spritzgeräten zum thermischen Spritzen von draht- und pulverförmigen Spritzzusatzwerkstoffen und zum HVOF (High-velocity-oxygen-fluel)-Spritzen geeignet ist, wobei es dem einzelnen Anwender möglich sein soll, Brenngase mit Hilfsverbrennungsgasen, wie z.B. Sauerstoff und Luft, und im Bedarfsfalle flüssige Brennstoffe direkt in Abhängigkeit von den gewünschten physikalischen Eigenschaften zu mischen.

Das erfindungsgemäße Injektor-Mundstück löst die voranstehende Aufgabe durch die Merkmale des Patentanspruchs 1. Danach ist das eingangs genannte Injektor-Mundstück für Brennaggregate derart ausgestaltet, daß zum Mischen von mindestens zwei Brennkomponenten die einer ersten Brennkomponente zugeordneten ersten Zuleitungskanäle in erste Injektordüsenbohrungen mit vermindertem Querschnitt münden, welche wiederum in einen ersten Radial-Injektorspalt münden, daß die der zweiten Brennkomponenten zugeordneten zweiten Zuleitungskanäle ebenfalls in den ersten Radial-Injektorspalt münden und daß mindestens für eine weitere dritte Brennkomponente Zuleitungskanäle vorgesehen sind, mit denen eine Innen- und/oder Außenmischung der ersten, zweiten und mindestens dritten Brennkomponente realisiert ist.

Erfindungsgemäß ist erkannt worden, daß das variable Einstellen der Betriebsparameter von Brennaggregaten bei der Verwendung von mehr als zwei Brennkomponenten, insbesondere bei der Verwendung von mehr als einem Brenngas, in relativ weiten Grenzen möglich ist. Erfindungsgemäß ist ferner erkannt worden, daß der Mischvorgang möglichst nahe an der Frontfläche einer Düse, beispielsweise mit nachgeschalteter Brennkammer, erfolgen sollte, um Rückzündungen bzw. ein Rückschlagen der Flamme zu vermeiden. Es ist außerdem erkannt worden, daß bei der Verwendung von mehreren Brennkomponenten, insbesondere mehreren Brenngasen in Verbindung mit flüssigen Brennstoffen nicht nur mit einer Innenmischung optimale Flammenverhältnisse erzielt werden können, sondern auch durch Außenmischung bzw. Außenbeimischung bestimmter Brennkomponenten, wie z.B. der flüssigen Brennstoffe. Es ist schließlich erkannt worden, daß die Mischung von mehreren Brennkomponenten innerhalb eines Injektor-Mundstücks erfolgen kann, wenn für mindestens eine weitere dritte Brennkomponente Zuleitungskanäle vorgesehen sind. Durch die geometrische Ausgestaltung und Anordung dieser Zuleitungskanäle im Bezug auf die Zuleitungskanäle der übrigen Brennkomponenten, läßt sich nun erfindungsgemäß eine Innen- und/oder Außenmischung der Brennkomponenten realisieren.

Es gibt nun verschiedene Möglichkeiten, das erfindungsgemäße Injektor-Mundstück auszugestalten und weiterzubilden, wozu auf die dem Patentanspruch 1 nachgeordneten Ansprüche hingewiesen wird.

Bei einer vorteilhaften Ausgestaltung des erfindungsgemäßen Injektor-Mundstücks setzen sich die ersten Zuleitungskanäle über die ersten Injektordüsenbohrungen und den ersten Radial-Injektorspalt in ersten Injektormischdüsenbohrungen fort, welche in einen zweiten Radial-Injektorspalt münden. Die der dritten Brennkomponente zugeordneten dritten Zuleitungskanäle münden ebenfalls in den zweiten Radial-Injektorspalt und bilden auf diese Weise sozusagen ein Doppel-Injektor-Mundstück. Dieses eignet sich besonders für Anwärmbrenner, Flammbrenner, Schneidbrenner, Draht- und Pulverflammspritzgeräte, sowie Hochgeschwindigkeits-Flammspritzgeräte. Diese Verbrauchsgeräte sind so ausgelegt, daß die jeweiligen Betriebsgase nach einem Radial-Achsial-Druckausgleich in den jeweiligen Druckausgleichskammern über eine Vielzahl von Achsialbohrungen, die auf unterschiedlichen Teilkreisen angeordnet sind, ungemischt dem Doppel-Injektor-Mundstück zugeführt werden. Diese Brennkomponenten-Mischtechnologie ist sehr einfach und kostengünstig und gewährleistet höchstmögliche Sicherheit in der Handhabung.

Bei einer weiteren vorteilhaften Variante des Injektor-Mundstücks münden die der dritten Brennkomponente zugeordneten dritten Zuleitungskanäle in den ersten Radial-Injektorspalt. Diese Variante läßt sich besonders vorteilhaft beim HVOF-Spritzen von niedrigschmelzenden Spritzwerkstoffen, wie z.B. Al, Zn, Cu-Werkstoffen u.a. verwenden. Beispielsweise kann als dritte Brennkomponente Stickstoff über den ersten Radial-Injektorspalt zugeführt werden, wodurch die Rückzündsicherheit des Geräts erhöht wird. So kann beispielsweise eine im Mischbereich des Brenngas-Hilfsverbrennungsgasgemisches entstehende Flamme durch Zusatz von Stickstoff in den Radial-Injektorspalt erstickt werden. Außerdem können die Flammentemperatur, die Zünd- und Verbrennungsgeschwindigkeit sowie die Primär-Flammenleistung der gezündeten Brenngas-Hilfsverbrennungsgasmischung beliebig manipuliert werden.

Besonders vorteilhaft ist es, wenn sich die ersten Zuleitungskanäle über den ersten und gegebenenfalls zweiten Radial-Injektorspalt in ersten Mischbohrungen fortsetzen. Für den reibungslosen Betrieb des erfindungsgemäßen Injektor-Mundstücks ist wesentlich, daß die Zuleitungskanäle genau zentrisch zu den entsprechenden Mischbohrungen ausgerichtet sind, damit Turbulenzen im Strom der Brennkomponenten vermieden werden.

Es gibt nun verschiedene Ausgestaltungen des erfindungsgemäßen Injektor-Mundstücks, bei denen die der dritten Brennkomponenten zugeordneten dritten Zuleitungskanäle in dritte Injektordüsenbohrungen mit vermindertem Querschnitt münden. Bei einer Variante münden diese dritten Injektordüsenbohrungen ebenfalls in den ersten Radial-Injektorspalt.

Auch diese Variante stellt ein Doppel-Injektor-Mundstück dar, wobei jedoch zwei getrennte Injektor-Mischsysteme vorliegen. Es werden also zwei getrennte Brennkomponentenmischungen im Innern des Injektor-Mundstücks hergestellt, welche sich dann erst nach dem Austritt aus dem Mundstück vermischen. Der Mischvorgang der Brennkomponenten besteht also aus einer Innenmischung von jeweils zwei Brennkomponenten, an die sich eine Außenmischung anschließt. Damit nun beide Injektorsysteme, die durch denselben Radial-Injektorspalt gespeist werden, einwandfrei arbeiten, ist es vorteilhaft, die ersten und die dritten Zuleitungskanäle gegeneinander versetzt auf den jeweiligen Kreisen anzuordnen. Dieses Doppel-Injektor-Mundstück eignet sich besonders für Anwärm- und Flammbrenner, für das Pulverflammspritzen von hochschmelzenden Spritzzusätzen, für Hochgeschwindigkeitsflammspritzsysteme und auch für Hochgeschwindigkeitsflammen mit hohem Flammdruck zur Erzeugung von synthetischen Diamantschichten auf Substraten.

Bei einer Weiterbildung des vorab beschriebenen Doppel-Injektor-Mundstücks setzen sich die ersten Zuleitungskanäle über die ersten Injektordüsenbohrungen und den ersten Radial-Injektorspalt in ersten Injektormischdüsenbohrungen fort und münden in einen zweiten Radial-Injektorspalt. Auch die dritten Zuleitungskanäle setzen sich über die dritten Injektordüsenbohrungen und den ersten Radial-Injektorspalt in dritten Injektormischdüsenbohrungen fort, welche unabhängig von den ersten Injektormischdüsenbohrungen sind und in den zweiten Radial-Injektorspalt münden. Diesem zweiten Radial-Injektorspalt wird schließlich über vierte Zuleitungen eine vierte Brennkomponente zugeführt. Mit diesem Injektor-Mundstück lassen sich im Zuge der Innenmischung zwei unabhängige Mischungen von drei Brennkomponenten herstellen, die dann im Zuge der Außenmischung vermischt werden.

Anwendungen dieser Ausführungsform liegen auf dem Gebiet der Sonderanwendungen der Hochgeschwindigkeitsflammtechnologie zur Herstellung von spezifischen Verbrennungs- und Flammeneigenschaften.

Das erfindungsgemäße Injektor-Mundstück kann auch so ausgestaltet sein, daß es mit flüssigen Brennstoffen betrieben werden kann, bzw. daß flüssige Brennstoffe zumindest eine Brennkomponente bilden. In einer besonders vorteilhaften Ausgestaltung eines solchen Injektor-Mundstücks münden die dritten Injektordüsenbohrungen in dritte Injektor-Mischbohrungen mit vergrößertem Querschnitt. In diese Injektor-Mischbohrungen münden außerdem die einer vierten, vorzugsweise flüssigen Brennkomponente zugeordneten vierten Zuleitungen. Der flüssige Brennstoff wird in die dritten Injektormischbohrungen eingespritzt, vorzugsweise mit einem Hilfsverbrennungsgas gemischt und tritt zerstäubt aus dem Injektor-Mundstück aus. Diese Vorrichtung eignet sich besonders für Flammbrenner, Schneidbrenner, HVOF-Flammspritzsysteme zum Verspritzen von draht- und pulverförmigen Spritzzusätzen für Sonderbrenner mit hohen Flammtemperaturen, -geschwindigkeiten und -drücken zum Herstellen von beispielsweise synthetischen Diamantschichten auf Substraten.

Für das Hochgeschwindigkeitsflammspritzen von draht- oder pulverförmigen Spritzzusatzwerkstoffen, für das Hochgeschwindigkeitsflammbrennen zum Erzeugen von extrem hohen Flammenenergien, -geschwindigkeiten, -druck und -temperatur unter Verwendung von Kohlenwasserstoffgasen und flüssigen Brennstoffen auf Kohlenwasserstoffbasis mit Hilfsverbrennungsgasen zur Herstellung von synthetischen Diamentschichten auf Substraten eignen sich besonders Injektor-Mundstücke, deren dritte Injektordüsenbohrungen in einen zweiten Radial-Injektorspalt münden, in den auch die einer vierten Brennkomponente zugeordneten vierten Zuleitungskanäle münden.

Bei Injektor-Mundstücken, die eine Außenmischung der Brennkomponenten realisieren, setzen sich die ersten Injektordüsenbohrungen bzw. Injektormischdüsenbohrungen in ersten Mischbohrungen fort. Auch die dritten Injektordüsenbohrungen bzw. Injektor-Mischdüsenbohrungen setzen sich in dritten Mischbohrungen fort, welche unabhängig von den ersten Mischbohrungen sind.

Die Beimischung von flüssigen Brennstoffen kann auch auf einfache Weise über Dritte, bzw. weitere Zuleitungskanäle erfolgen, welche als Zerstäuberdüsenbohrungen für flüssige Brennstoffe ausgebildet sind. Je nach Anwendung können diese Zerstäuberdüsenbohrungen axial und/oder fokussierend bezüglich der Achse des Injektor-Mundstücks ausgebildet sein.

Im übrigen ist es oftmals vorteilhaft, mindestens eine weitere Brennkomponente über weitere Zuleitungskanäle unabhängig von der ersten, zweiten und dritten Brennkomponente zur Frontfläche des Injektor-Mundstücks zu führen, wo dann eine Außenmischung mit den übrigen Brennkomponenten stattfinden kann. Diese der mindestens einen weiteren Brennkomponenten zugeordneten weiteren Zuleitungskanäle, können beispielweise in einen Ringspalt münden, von dem ausgehend Austrittsbohrungen an die Frontfläche des Injektor-Mundstücks geführt sind. In dem Ringspalt kann dann auch noch eine Mischung von mehreren weiteren Brennkomponenten stattfinden.

Es sei schließlich darauf hingewiesen, daß sowohl die Mischbohrungen als auch die Austrittsbohrungen des Injektor-Mundstücks frontseitig axial und/oder fokussierend orientiert sein können. Die voranbeschrieben Ausgestaltungen des erfindungsgemäßen Injektor-Mundstücks können mit einer Zentralbohrung versehen sein. Auch diese Zentralbohrung kann in einer vorteilhaften Ausgestaltung in einen Zentral-Injektorspalt münden, in den auch die einer Brennkomponente zugeordneten Zuleitungskanäle münden, so daß eine Mischung der in der Zentralbohrung geführten Brennkomponente mit der in den Zuleitungskanälen geführten Brennkomponente realisiert werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche und andererseits auf die nachfolgende Erläuterung von Ausführungsbeispielen der Erfindung anhand der Zeichnung zu verweisen.

In der Zeichnung zeigen die
- Figur 1a: den Schnitt durch ein erfindungsgemäßes Injektor-Mundstück
- Figur 1b: eine Aufsicht auf die Frontfläche des in Figur 1a dargestellten Injektor-Mundstücks und
- Figur 1c: den Schnitt durch das in Figur 1a dargestellte Injektor-Mundstück mit einer nachgeschalteten Brennkammer und Expansionsdüse.
- Die Figuren 2 bis 11a und b: zeigen entsprechend jeweils den Schnitt durch eine Ausführungsform eines erfindungsgemäßen Injektor-Mundstücks sowie die Aufsicht auf die Frontfläche des jeweiligen Injektor-Mundstücks.
- Figur 5c: zeigt die Vergrößerung eines in der Figur 5a gekennzeichneten Details des in der Figur 5 dargestellten Injektor-Mundstücks.

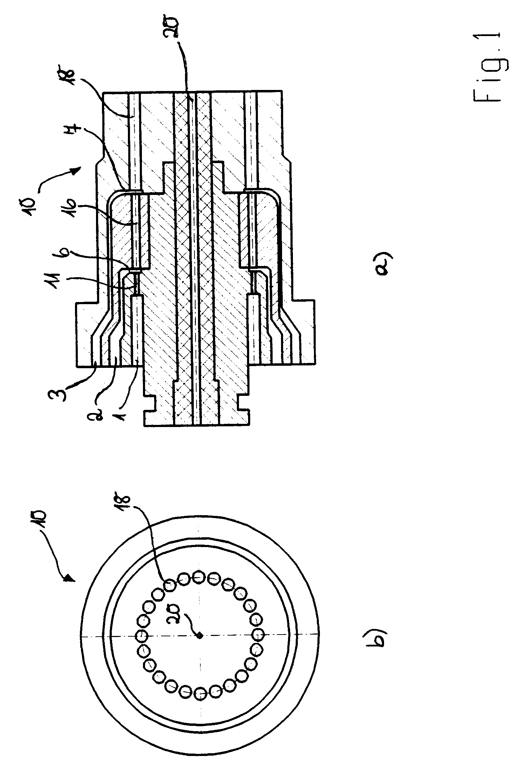

Figur 1a zeigt einen Schnitt durch ein erfindungsgemäßes Injektor-Mundstücks 10 für Brennaggregate zum Mischen von Brennkomponenten, insbesondere Brenngasen, Hilfsverbrennungsgasen und gegebenenfalls flüssigen Brennstoffen, mit Zuleitungskanälen 1, 2, 3 für die einzelnen Brennkomponenten, wobei die Zuleitungskanäle 1 , 2, 3 der einzelnen Brennkomponenten vorzugsweise jeweils durch eine Gruppe von auf einem Kreis angeordneten Achsialbohrungen gebildet sind und die den einzelnen Brennkomponenten zugeordneten Gruppen von Achsialbohrungen auf konzentrischen Kreisen angeordent sind.

Zum Mischen von mindestens zwei Brennkomponenten münden erfindungsgemäß die einer ersten Brennkomponente zugeordneten ersten Zuleitungskanäle 1 in erste Injektordüsenbohrungen 11 mit vermindertem Querschnitt, welche wiederum in einen ersten Radial-Injektorspalt 6 münden. Die der zweiten Brennkomponente zugeordneten zweiten Zuleitungskanäle 2 münden ebenfalls in den ersten Radial-Injektorspalt 6. Erfindungsgemäß sind ferner für mindestens eine weitere dritte Brennkomponente dritte Zuleitungskanäle 3 vorgesehen, mit denen bei der in Figur 1 dargestellten Ausführungsform eine Innenmischung der ersten, zweiten und dritten Brennkomponente realisiert ist.

Die ersten Zuleitungskanäle 1 setzen sich über die ersten Injektordüsenbohrungen 11 und den ersten Radial-Injektorspalt 6 in ersten Injektormischdüsenbohrungen 16 fort, welche in einen zweiten Radial-Injektorspalt 7 münden. Die der dritten Brennkomponente zugeordneten dritten Zuleitungskanäle 3 münden ebenfalls in den zweiten Radial-Injektorspalt 7. Die ersten Zuleitungskanäle 1 setzen sich über die ersten Injektordüsenbohrungen 11, den ersten Radial-Injektorspalt 6, die ersten Injektormischdüsenbohrungen 16, sowie den zweiten Radial-Injektorspalt 7 in ersten Mischbohrungen 18 fort, welche in die Frontfläche des Injektor-Mundstücks 10 münden.

Das in der Figur 1 dargestellte Injektor-Mundstück 10 weist schließlich noch eine Zentralbohrung 20 auf.

Der Figur 1b, die eine Aufsicht auf die Frontfläche des Injektor-Mundstücks 10 darstellt, ist zu entnehmen, daß die Mischbohrungen 18 und damit auch die Injektormischdüsenbohrungen 16, die Injektordüsenbohrungen 11 auf einem Kreis um die Zentralbohrung 20 angeordnet sind.

Dem Injektor-Mundstück 10 wird üblicherweise eine Brennkammer 25 nachgeschaltet, welche über einen Übergangskonus 26 in eine Expansionsdüse 27 übergeht. Dies ist in Figur 1c dargestellt.

Das vorab beschriebene Injektor-Mundstück stellt ein gasmischendes Doppel-Injektor-Mundstück für Anwärmbrenner, Flammbrenner, Schneidbrenner, Draht- und Pulverflammspritzgeräte und beispielsweise Hochgeschwindigkeitsflammspritzgeräte dar.

Diese Verbrauchsgeräte sind so ausgelegt, daß die jeweiligen Betriebsgase nach einem Radial-Achsialdruckausgleich in den jeweiligen Druckausgleichskammern über eine Vielzahl von Achsialbohrungen, die auf unterschiedlichen Teilkreisen angeordnet sind, ungemischt dem Doppel-Injektor-Mundstück zugeführt werden, wie in der Figur 1 schematisch dargestellt ist. In der Zentralbohrung 20 werden je nach Verwendung Schneidsauerstoff, Pulvertransportgas mit Pulver oder andere Betriebskomponenten zugeführt und treten aus der Frontfläche des Injektor-Mundstücks im Zentrum aus. Über die Vielzahl von Zuleitungskanälen 1 auf dem inneren Teilkreis gelangt Sauerstoff in die Injektordüsenbohrungen 11 und durchströmt mit Überschallgeschwindigkeit den ersten Radial-Injektorspalt 6 (Primär-Brenngas) der über die Zuleitungskanäle 2 auf dem mittleren Teilkreis mit Primärheizgas, wie z.B. Wasserstoff oder Propangas, gespeist wird. Infolge der hohen Strömungsgeschwindigkeit der aus den Injektordüsenbohrungen 11 auströmenden Sauerstoffströme, die in die jeweils gegenüberliegenden Injektormischdüsenbohrungen 16 münden, entsteht in dem mit Primärgas gefüllten ersten Radial-Injektorspalt 6 ein Unterdruck, der das Primärbrenngas ansaugt und in die Injektormischdüsenbohrungen 16 mitreißt.

Das hierbei entstehende Brenngas-Sauerstoffgemisch durchströmt als solches ebenfalls mit sehr hoher Geschwindigkeit den mit Sekundärgas, beispielsweise Acetylen, gefüllten zweiten Radial-Injektorspalt 7 und saugt das Sekundärbrenngas in die Mischbohrungen 18. Aus den stirnseitig radial-konzentrisch um die Zentralbohrung 20 angeordnete Mischbohrungen 18 tritt das zündfähige Gasgemisch aus.

Das Sekundärbrenngas gelangt über die Vielzahl von Zuleitungskanälen 3 in den zweiten Radial-Injektorspalt 7.

Die vorausgeschilderte Gasmischtechnologie ist sehr einfach und kostengünstig und gewährleistet höchstmögliche Sicherheit in der Handhabung. Beim Mischen des Primär-Brenngases Wasserstoff mit dem Sekundärbrenngas Acetylen und dem Hilfsverbrennungsgas Sauerstoff, entsteht ein Brenngas-Sauerstoffgemisch mit sehr hohem, spezifischem Heizwert und anderen speziellen, positiven Eigenschaften.

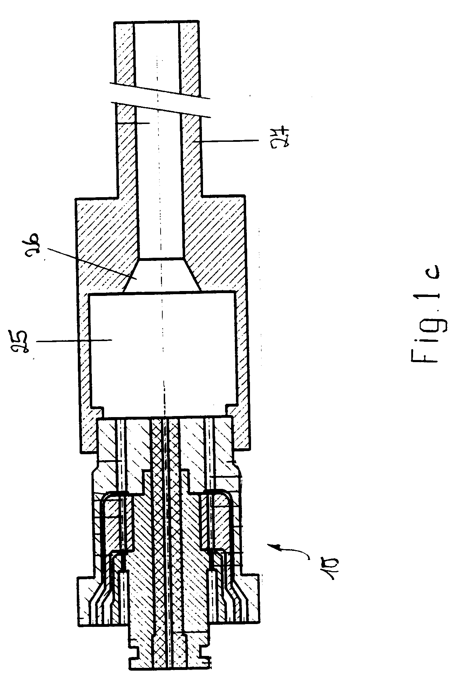

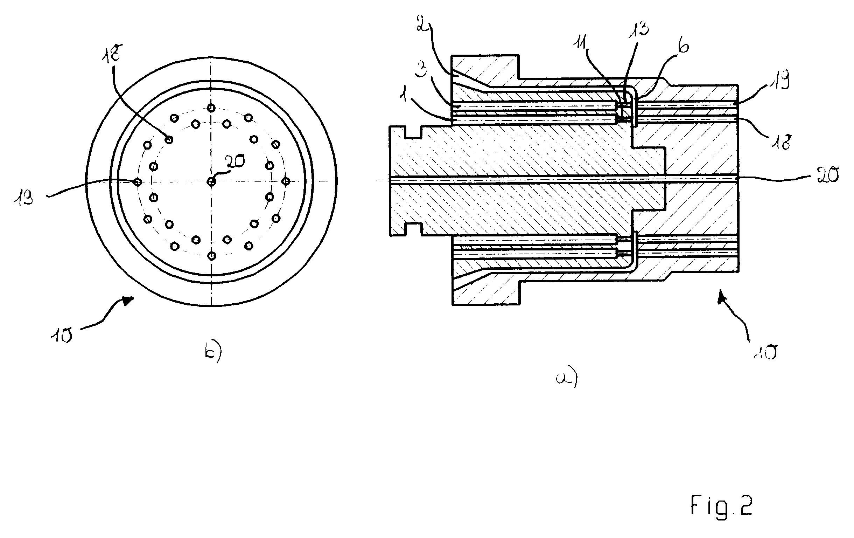

In den Figuren 2a und b ist ein Injektor-Mundstück 10 dargestellt, das wie das in Figur 1 dargestellt Injektor-Mundstück eine Zentralbohrung 20 aufweist und dessen erste Zuleitungskanäle 1 über erste Injektordüsenbohrungen 11 in einen ersten Radial-Injektorspalt 1 münden, um sich in einer ersten Mischbohrung 18 bis zur Frontfläche des Injektor-Mundstücks 10 fortzusetzen.

Zum Unterschied gegenüber der in Figur 1 dargestellten Ausführungsform münden hier die der dritten Brennkomponente zugeordneten dritten Zuleitungskanäle 3 in dritte Injektordüsenbohrungen 13 mit vermindertem Querschnitt. Diese dritten Injektordüsenbohrungen 13 münden ebenfalls in den ersten Radial-Injektorspalt 6.
Der in Figur 2a dargestellten Aufsicht auf die Frontfläche des Injektormundstücks 10 ist zu entnehmen, daß die ersten und die dritten Zuleitungskanäle 1 und 3 sowie deren Verlängerungen gegeneinander versetzt auf den jeweiligen Kreisen angeordnet sind.

Auch bei dem in Figur 2 dargestellten Injektor-Mundstück handelt es sich um ein Doppel-Injektor-Mundstück für Anwärme- und Flammbrenner, für das Pulverflammspritzen von hochschmelzenden Spritzzusätzen, für Hochgeschwindigkeitsflammspritzsysteme, für Hochgeschwindigkeitsflammen mit hohem Flammdruck zur Erzeugung von synthetischen Diamantschichten auf Substraten und anderen Sonderanwendungen.

Auch diesem Doppel-Injektor-Mundstück werden die einzelnen Betriebsgase über Radial-Achsial-Druckausgleichskammern ungemischt zugeführt, was den Vorteil hat, daß die einzelnen auf verschiedenen Teilkreisen, konzentrisch um die Zentralbohrung angeordneten, einzelnen Gasströme beim Eintritt in das jeweils zugeordnete Injektormischsystem Druck-, Geschwindigkeits- und Mengengleich sind, was nach der Mischung und Zündung des Gasgemischs zu einem symmetrischen Flammenbild und einer optimalen Verbrennung führt.

Durch die Zentralbohrung 20 werden je nach Anwendung die Betriebskomponenten, wie z.B. Pulvertransportgas mit pulverförmigen Spritzzusatz, Graphit oder Kohlendioxid zugeführt. Über die Zuleitungskanäle 2 auf dem äußersten Teilkreis wird z.B. das Brenngas Acetylen zugeführt, das den ersten Radial-Injektorspalt 6 füllt. Durch die auf dem innersten Teilkreis angeordneten Zuleitungskanäle 1 wird ein zweites Brenngas, z.B. Wasserstoff, mit hohem Zuströmdruck zugeführt und in den ersten Injektordüsenbohrungen 11 auf Schallgeschwindigkeit beschleunigt. Die Vielzahl von Hochgeschwindigkeits-Wasserstoffströmen durchströmt den mit Acetylen gefüllten ersten Radial-Injektorspalt 6 und mündet in die jeweils gegenüberliegenden Mischbohrungen 18, wobei sie Acetylen mit sich reißen. In dem ersten Radial-Injektorspalt 6 entsteht ein Unterdruck, so daß weiteres Acetylen regelrecht angesaugt wird.

Das Brenngas-Brenngas-Gemisch entsteht in den ersten Mischbohrungen 18 und tritt aus der Frontfläche des Injektormundstücks 10 konzentrisch um die Zentralbohrung 20 aus.

Über die auf dem mittleren Teilkreis angeordneten Zuleitungskanäle 3 wird Sauerstoff mit hohem Druck durch die dritten Injektordüsenbohrungen 13 gepreßt, so daß die einzelnen Sauerstoffströme, die aus den dritten Injektordüsenbohrungen 13 in den ersten Radial-Injektorspalt 6 münden, diesen mit Schallgeschwindigkeit durchströmen und in die gegenüberliegenden dritten Mischbohrungen 19 eintreten, wobei sie Acetylen aus dem ersten Radial-Injektorspalt 6 mitreißen. In dem ersten Radial-Injektorspalt 6 entsteht aufgrund der Überschallströmung der Sauerstoffströme ein zusätzlicher Unterdruck, so daß Acetylen verstärkt angesaugt wird. Aus den dritten Mischbohrungen 19, die konzentrisch auf dem äußeren Teilkreis angeordnet sind, strömt das gemischte zündfähige Acetylen-Sauerstoff-Gemisch aus.

Wie bereits erwähnt, sind die ersten Mischbohrungen 18 für das Brenngas-Brenngas-Gemisch auf dem inneren Teilkreis jeweils um eine Bohrung versetzt gegenüber den dritten Mischbohrungen 19 des Brenngas-Sauerstoff-Gemisches auf dem äußeren Teilkreis. Dadurch wird gewährleistet, daß beide Injektorsysteme, nämlich das für die Brenngas-Brenngas-Mischung und das für die Brenngas-Sauerstoff-Mischung, einwandfrei arbeiten können.

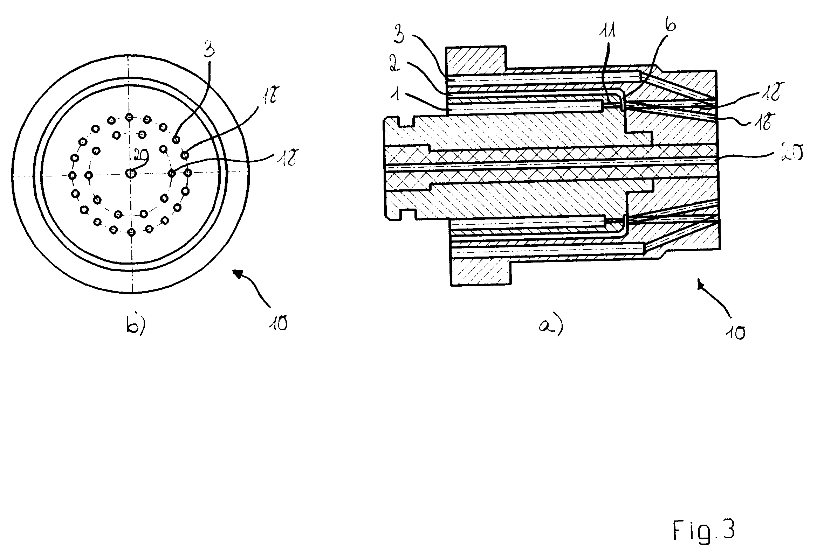

Figur 3 zeigt eine Ausführungsform eines Injektor-Mundstücks 10, welches ebenfalls mit einer Zentralbohrung 20 versehen ist und erste Zuleitungskanäle 1 aufweist, welche über erste Injektordüsenbohrungen 11 in einen ersten Radial-Injektorspalt 6 münden und sich dann in ersten Mischbohrungen 18 fortsetzen.

Angemerkt sei hier, daß die Mischbohrungen 18 sowohl axial als auch fokussierend bezüglich der Zentralbohrung 20 des Injektor-Mundstücks 10 orientiert sein können.

Die der dritten Brennkomponente zugeordnete dritten Zuleitungskanäle 3 sind als Zerstäuberdüsenbohrungen für flüssigen Brennstoff ausgebildet und fokussierend bezüglich der Zentralbohrung 20 orientiert. Sie sind direkt an die Frontfläche des Injektor-Mundstücks geführt.

Dieses in Figur 3 dargestellte Injektor-Mundstück 10 eignet sich besonders für Hochgeschwindigkeits-Flammspritzsysteme zum Spritzen von pulver- und drahtförmigen Zusätzen, oder auch für Hochgeschwindigkeitsbrenner zur Erzeugung einer Hochgeschwindigkeitsflamme unter Verwendung von gasförmigen Kohlenwasserstoffen und flüssigen Kohlenwasserstoffbrennstoffen zur Erzeugung von synthetischen Diamantschichten auf Substraten.

Mit dem in Figur 3 dargestellten Injektor-Mundstück können also Mischungen von gasförmigen und flüssigen Brennstoffen mit einem Hilfsverbrennungsgas erstellt werden, und zwar im Zuge einer Außenmischung.

Über die Zentralbohrung 20 werden je nach Anwendung Pulvertransportgas und Pulver, Spritzdraht und/oder Kohlendioxid und andere Betriebskomponenten zugeführt. Die Brenngas-Sauerstoffmischung erfolgt nach dem Injektorprinzip über die Sauerstoff-Zuleitungskanäle 1, den ersten Radial-Injektorspalt 6, in den die jeweiligen Brenngase über die Zuleitungskanäle 2 zugeführt werden, und die ersten Mischbohrungen 18, die axial und/oder fokussierend angeordnet sind.

Über die Zuleitungskanäle 3 des äußeren Teilkreises wird flüssiger Brennstoff, z.B. Benzin oder andere, mit hohem Druck zur Frontfläche des Injektor-Mundstücks 10 geführt. Nachdem das Brenngas-Sauerstoffgemisch gezündet ist, das aus einer Vielzahl von konzentrisch um die Zentralbohrung 20 angeordneten ersten Mischbohrungen 18 ausströmt, wird flüssiger Brennstoff durch die als Zerstäuberdüsenbohrungen ausgebildeten Zuleitungskanäle 3 gepreßt, so daß der zerstäubte flüssige Brennstoff sich an der Pilotflamme entzündet.

Der Zünd- und Verbrennungsvorgang findet zur Erzeugung einer Hochgeschwindigkeitsflamme mit extrem hoher Flammenenergie und -druck in einer dem Injektor-Mundstück direkt nachgeschalteten, gegebenenfalls wassergekühlten Brennkammer 25 mit einer sich anschließenden Expansionsdüse 27 statt.

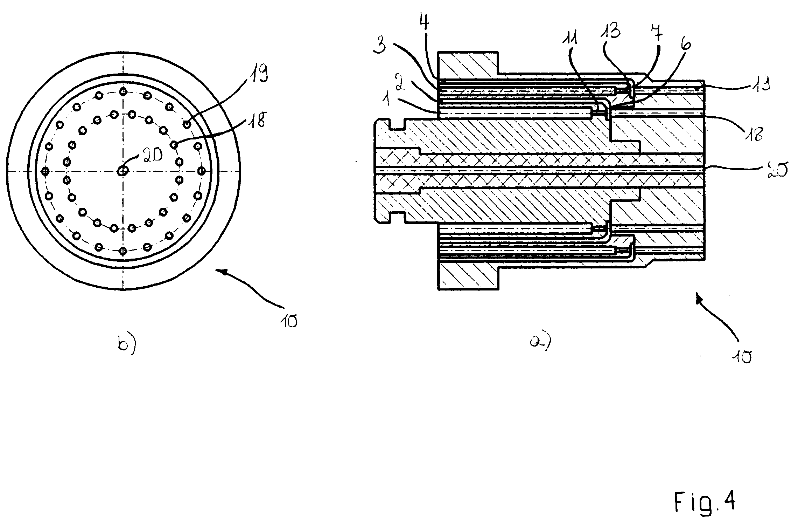

Die in Figur 4 dargestellte Ausführungsform eines Injektor-Mundstücks 10 unterscheidet sich von den voranbeschriebenen Ausführungsformen wieder durch die Ausgestaltung und Ausbildung der dritten Zuleitungskanäle 3. Diese der dritten Brennkomponente zugeordneten dritten Zuleitungskanäle 3 münden in dritte Injektordüsenbohrungen 13 mit vermindertem Querschnitt. Diese dritten Injektordüsenbohrungen 13 münden in einen zweiten Radial-Injektorspalt 7. Die einer vierten Brennkomponte zugeordneten vierten Zuleitungskanäle 4 münden ebenfalls in den zweiten Radial-Injektorspalt 7. Die ersten Injektordüsenbohrungen 11 setzen sich in ersten Mischbohrungen 18 fort, so wie die dritten Injektordüsenbohrungen 13, die sich in dritten Mischbohrungen 19 fortsetzen, welche unabhängig von den ersten Mischbohrungen 18 sind.

Auch bei diesem Injektor-Mundstück handelt es sich um ein Doppel-Injektor-Mundstück, wobei hier zwei vollständig getrennte Injektorsysteme vorliegen. Dieses Doppel-Injektor-Mundstück eignet sich besonders zum Hochgeschwindigkeitsflammspritzen von draht- oder pulverförmigen Spritzzusatzwerkstoffen, für Hochgeschwindigkeitsflammbrenner zum Erzeugen von extrem hohen Flammenenergien, -geschwindigkeiten, druck und temperaturen unter Verwendung von Kohlenwasserstoffgasen und flüssigen Brennstoffen auf Kohlenwasserstoffbasis mit Hilfsverbrennungsgasen, wie z.B. Sauerstoff zur Herstellung von synthetischen Diamentschichten auf Substraten.

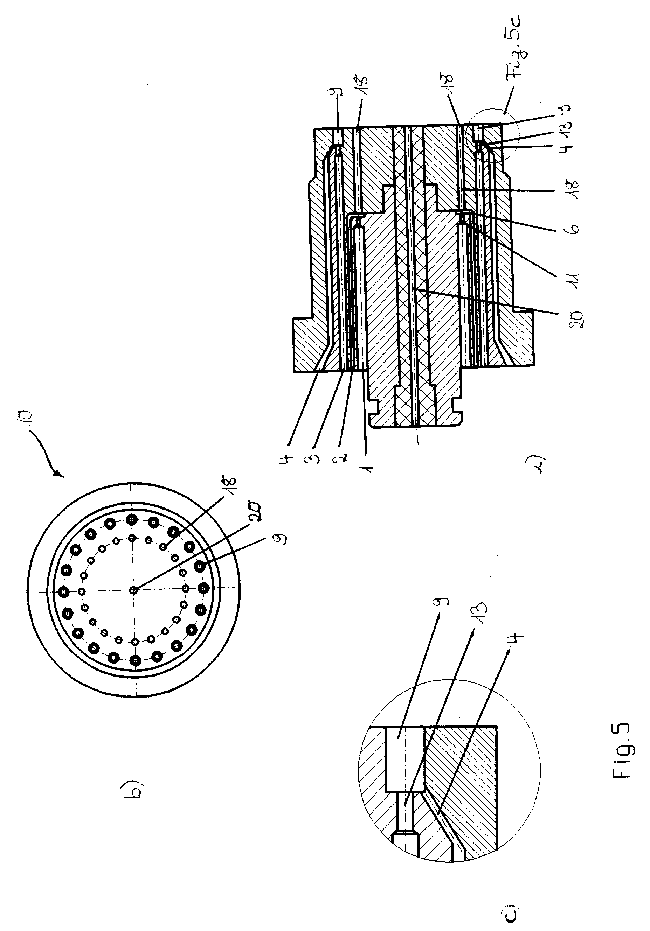

In Figur 5 ist eine Ausführungsform eines Injektor-Mundstücks 10 dargestellt, bei der die der dritten Brennkomponente zugeordneten dritten Zuleitungskanäle 3 in dritte Injektordüsenbohrungen 13 mit vermindertem Querschnitt münden. Diese dritten Injektordüsenbohrungen 13 wiederum münden in dritte Injektormischbohrungen 9 mit vergrößertem Querschnitt. Die einer vierten Brennkomponente zugeordneten vierten Zuleitungskanäle 4 münden ebenfalls in diese dritten Injektormischbohrungen 9, welche direkt an der Frontfläche des Injektor-Mundstücks 10 ausgebildet sind.

Hierbei handelt es sich um ein Injektor-Mundstück zum Mischen von Brenngasen mit Hilfsverbrennungsgasen und flüssigen Brennstoffen zum Erzeugen von spezifischen Gemischen in beliebigen Zusammensetzungen. Anwendungsgebiete für solche Injektor-Mundstücke sind Flammbrenner, Schneidbrenner, HVOF-Flammspritzsysteme zum Verspritzen von draht- und pulverförmigen Spritzzusätzen, Erzeugung von Sonderbrennern mit hoher Flammentemperatur, -geschwindigkeit und -drücken zum Herstellen beispielsweise von synthetischen Diamantschichten auf Substraten.

Über die Zentralbohrung 20 können beliebige Betriebskomponenten, beispielsweise Spritzpulver, Pulvertransportgas, drahtförmige Spritzzusätze oder ähnliches, zugeführt werden. Ein Hilfsverbrennungsgas, wie z.B. Sauerstoff, wird über die auf dem inneren Teilkreis angeordneten Zuleitungskanäle 1 den ersten Injektordüsenbohrungen 11 mit hohem Druck zugeführt und auf Schallgeschwindigkeit beschleunigt. Im Bedarfsfalle kann dem Hilfsverbrennungsgas beispielsweise Stickstoff zugesetzt werden, um die Zünd- und Verbrennungsgeschwindigkeiten des hergestellten Gemisches manipulieren zu können. Über die auf dem zweiten, inneren Teilkreis angeordneten zweiten Zuleitungskanäle 2 werden mit niedrigen Drücken Brenngase, wie z.B. Wasserstoff, Acetylen, Propylen oder Propangas zugeführt und gelangen in den ersten Radial-Injektorspalt 6. Dieser wird von dem aus den Injektordüsenbohrungen 11 ausströmenden, hochbeschleunigten Sauerstoff durchströmt, wobei Brenngas in die jeweils gegenüberliegenden ersten Mischbohrungen 18 mitgerissen wird. Auf der Frontfläche des Injektor-Mundstücks 10 tritt dann ein Sauerstoff-Brenngasgemisch aus. Beim Zünden entsteht ein Pilot-Flammenring, der konzentrisch um die Zentralbohrung 20 angeordnet ist. Durch eine Vielzahl von Zuleitungskanälen 3, die auf einem dritten Teilkreis angeordnet sind, wird mit hohem Druck ein zweites Hilfsverbrennungsgas, beispielsweise Sauerstoff oder ein Luftgemisch zugeführt, welches in Verbindung mit flüssigem Brennstoff die Hauptflammen versorgen soll. In den dritten Injektordüsenbohrungen 13 werden die einzelnen Ströme des zweiten Hilfsverbrennungsgases auf Schallgeschwindigkeit beschleunigt und münden in die angeschlossenen, erweiterten Injektormischbohrungen 9.

In diese erweiterten Injektormischbohrungen 9 münden auch vierte Zuleitungskanäle 4 für einen flüssigen Brennstoff, wie beispielsweise Benzin. Der flüssige Brennstoff wird in die Injektormischbohrungen 9 eingespritzt, vermischt sich dort mit dem zweiten Hilfsverbrennungsgas und tritt zerstäubt an der Frontfläche des Injektor-Mundstücks 10 aus. Das austretende Gemisch entzündet sich an dem innenliegenden Pilot-Flammenringen. Der flüssige Brennstoff wird den vierten Zuleitungskanälen 4 auf dem äußeren Teilkreis unter einem hohen, durch eine Pumpe erzeugten Druck zugeführt.

Die Figur 5c zeigt vergrößert die konstruktive Ausgestaltung der Mündung eines vierten Zuleitungskanals 4 in eine erweiterte Injektormischbohrung 9 an der Frontfläche des Injektor-Mundstücks 10.

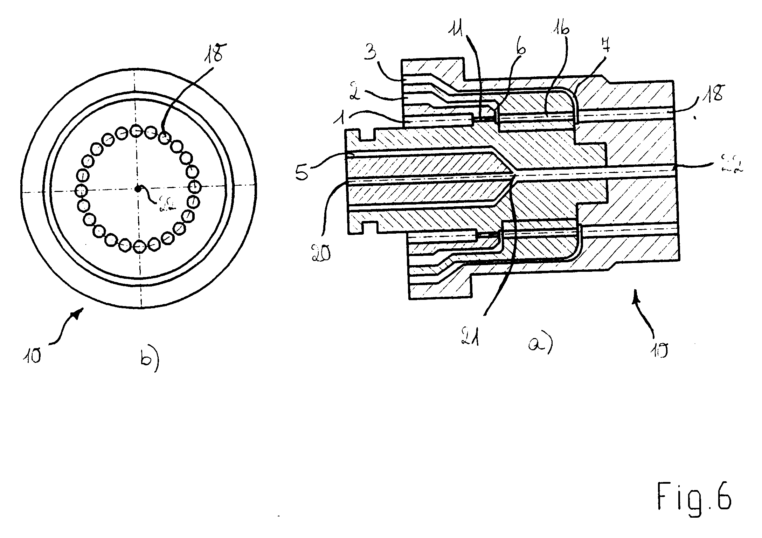

In Figur 6 ist eine Ausgestaltung eines Injektor-Mundstücks dargestellt, das der des in Figur 1 dargestellten Injektor-Mundstücks sehr ähnlich ist. Die Zentralbohrung 20 mündet hier in einen Zentral-Injektorspalt 21, dem über Zuleitungskanäle 5 mindestens eine weitere Brennkomponente zugeführt wird. Die Zentralbohrung 20 setzt sich dann über den Zentralinjektorspalt 21 in einer Zentralmischbohrung 22 fort.

Hierbei handelt es sich um ein Dreifach-Injektor-Mundstück zum Mischen von verschiedenen Brenngasen mit Sauerstoff.

Durch die Zentralbohrung 20 strömt ein Hilfsverbrennungsgas, beispielsweise Sauerstoff, aus durchströmt mit Schallgeschwindigkeit den Zentral-Injektorspalt 21 und mündet in die Zentralmischbohrung 22.

Über die Zuleitungskanäle 5 wird dem Zentralinjektorspalt 21 beispielsweise Wasserstoff zugeführt, der von dem Hilfsverbrennungsgas Sauerstoff mit Schallgeschwindigkeit durchströmt wird, wobei Wasserstoff in die Zentralmischbohrung 22 mitgerissen wird. Das Wasserstoff-Sauerstoff-Gemisch tritt an der Frontfläche des Injektor-Mundstücks aus. Über die ersten Zuleitungskanäle 1 wird ebenfalls ein Hilfsverbrennungsgas, wie z.B. Sauerstoff, zugeführt, das in den ersten Injektordüsenbohrungen 11 auf Schallgeschwindigkeit beschleunigt wird und den ersten Radial-Injektorspalt 6 durchströmt, der beispielsweise mit Propangas gefüllt ist, welches über die zweiten Zuleitungskanäle 2 mit niedrigem Druck zugeführt wird. Die hochbeschleunigten Sauerstoffströme, die aus den ersten Injektordüsenbohrungen 11 austreten, reißen beim Durchströmen des ersten Radial-Injektorspalts 6 Propangas mit in die ersten Injektormischdüsenbohrungen 16, die exakt zentriert den einzelnen Injektordüsenbohrungen 11 gegenüberliegen. Das Wasserstoff-Sauerstoff-Gemisch durchströmt aus den ersten Injektormischdüsenbohrungen 16 austretend den zweiten Radial-Injektorspalt 7 mit Schallgeschwindigkeit und reißt aus dem mit Acetylen gefüllten zweiten Radial-Injektorspalt 7 Acetylen mit. Dieses Acetylen wird über die dritten Zuleitungskanäle 3 dem zweiten Radial-Injektorspalt 7 zugeführt. An der Frontfläche des Injektor-Mundstücks 10 tritt dann ein Wasserstoff-Acetylen-Sauerstoff-Gemisch aus. Beim Zünden entsteht im Zentrum eine Hochenergie-Wasserstoff-Sauerstoff-Flamme, die konzentrisch umhüllt von einer Vielzahl von Einzelflammen ist, die aus dem Wasserstoff-Acetylen-Sauerstoff-Zündgemisch gespeist werden.

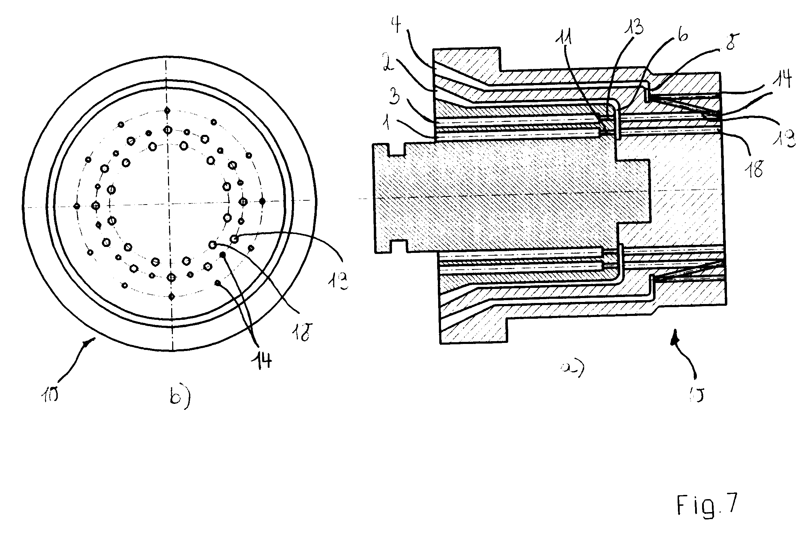

In Figur 7 ist eine Ausführungsform eines Injektor-Mundstücks 10 dargestellt, welche keine Zentralbohrung aufweist. Die ersten, zweiten und dritten Zuleitungskanäle 1,2 und 3 sind genauso geführt, wie in dem in Figur 2 dargestellten Ausführungsbeispiel. Zusätzlich sind hier auf einem vierten äußeren Teilkreis angeordnete vierte Zuleitungskanäle 4 vorgesehen, welche unabhängig von der ersten, zweiten und dritten Brennkomponente zur Frontfläche des Injektormundstücks geführt sind. Diese Zuleitungskanäle 4 münden in einen Ringspalt 8, von dem ausgehend Austrittsbohrungen 14 an die Frontfläche des Injektormundstücks 10 geführt sind. Dies Austrittsbohrungen 14 sind axial und/oder fokussierend orientiert.

Mit dem hier dargestellten Injektor-Mundstück läßt sich eine Brenngas-Brenngas-Injektor-Mischung mit Außenzumischung von Hilfsverbrennungsgasen, wie z.B. Sauerstoff oder Luft realisieren. Anwendung findet ein solches System beim Hochgeschwindigkeitsflammspritzen, für Hochgeschwindigkeitsflammbrenner und für Sonderbrenner, die hohe Flammendrücke erzeugen.

Über die auf dem innenliegenden Teilkreis befindlichen Zuleitungskanäle 1 wird beispielsweise Wasserstoff mit hohem Druck zugeführt und in den ersten Injektordüsenbohrungen 11 auf Schallgeschwindigkeit beschleunigt. Die aus den ersten Injektordüsenbohrungen 11 hochbeschleunigt austretenden Wasserstoffströme durchströmen den mit Acetylen gefüllten ersten Radial-Injektorspalt 6, der bei einem maximalen Zuströmdruck von 1,5 bar über die auf dem mittleren Teilkreis liegenden Zuleitungskanäle 2 gespeist wird.

Dabei wird Acetylen mit dem Wasserstoff in die gegenüberliegenden ersten Mischbohrungen 18 gerissen, so daß an der Frontfläche des Injektormundstücks 10 ein Wasserstoff-Acetylen-Gemisch austritt.

Über die auf dem zweiten Teilkreis angeordneten dritten Zuleitungskanäle 3 wird Propangas, Propylen oder Ethen als Injektordruckgas bei ca. 5,0 bis 6,0 bar Zuströmdruck zugeführt und in den dritten Injektordüsenbohrungen 13 ebenfalls auf Schallgeschwindigkeit beschleunigt. Die ersten und dritten Injektordüsenbohrungen 11 und 13 sind jeweils um eine Bohrung versetzt angeordnet, um ein einwandfreies Ansaugen von Acetylen aus dem Radial-Injektorspalt 6 zu gewährleisten.

Die aus den dritten Injektordüsenbohrungen 13 austretenden, hochbeschleunigten Gasströme reißen ebenfalls aus dem ersten Radial-Injektorspalt 6 Acetylen in die dritten Mischbohrungen 19, aus denen das Brenngas-Brenngasgemisch an der Frontfläche des Injektor-Mundstücks 10 austritt.

Über die auf dem äußeren Teilkreis angeordneten Zuleitungskanäle 4 wird ein Hilfsverbrennungsgas, wie beispielsweise Sauerstoff oder ein Sauerstoff-Stickstoff-Gemisch zugeführt und mündet in die Ringnut 8, von der aus es über die Austrittsbohrungen 14 axial und/oder fokussiert stirnseitig austritt.

Das beschriebene Mischsystem eignet sich besonders zur Herstellung von extrem hohen Flammendrücken, wenn die Brenngasgemische mit einem Hilfsverbrennungsgas in einer nachgeschalteten, wassergekühlten Brennkammer mit Expansionsdüse verbrannt werden.

Das Brenngas-Brenngas-Injektor-Mischsystem ist dabei absolut flammenrückschlag- und rückzündsicher.

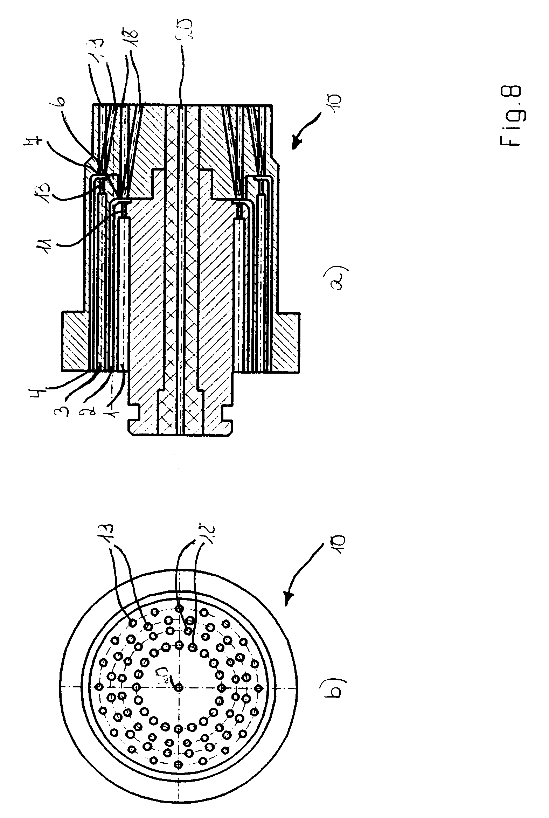

In Figur 8 ist nun eine Ausführungsform eines Injektor-Mundstücks dargestellt, die weitgehend der in Figur 4 dargestellten Ausführungsform entspricht. Lediglich die ersten und dritten Mischbohrungen sind alternierend, axial und/oder fokussierend orientiert.

Die Figur 8 zeigt also ein Doppel-Injektor-Mundstück, welches besonders geeignet ist zur Erzeugung einer Hochgeschwindigkeitsflamme für Sonderanwendungen, wie z.B. das Herstellen von synthetischen Diamantschichten auf Substraten, da die nachgeschaltete Expansionsdüse mit Brennkammer mit beliebiger Frequenz wechselseitig mit einer Acetylen-Sauerstoff-Flamme und einer Wasserstoff-Sauerstoff-Flamme gefahren werden kann.

Das Injektor-Mundstück weist zwei getrennt arbeitende Injektor-Gasmischsysteme auf. Jedes der beiden Gasmischsysteme besitzt eine Vielzahl von einzelnen konzentrisch um die Zentralbohrung 20 angeordneten Injektorgasmischsystemen, bestehend aus jeweils den Zuleitungskanälen 1 bzw. 3, den Injektordüsenbohrungen 11 bzw. 13, den Radial-Injektorspalten 6 bzw. 7, den Zuleitungskanälen 2 bzw. 4 und den Mischbohrungen 18 bzw. 19.

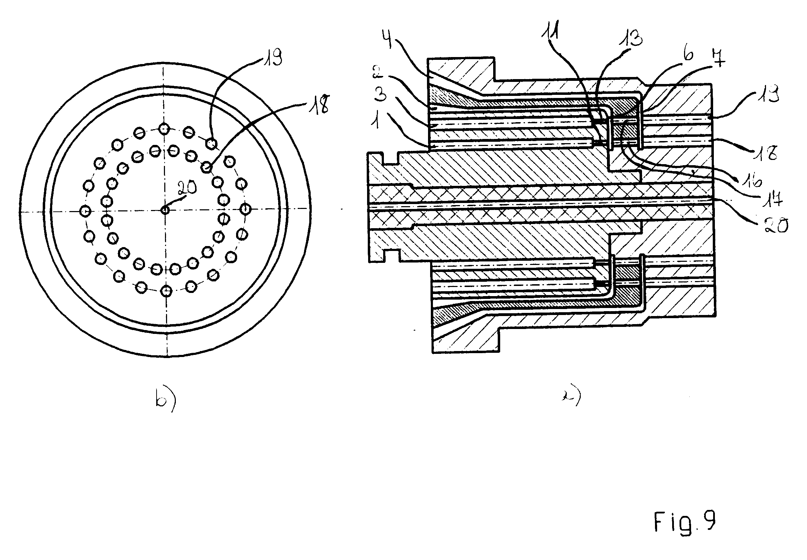

In Figur 9 ist eine Fortbildung des in Figur 2 dargestellten Injektor-Mundstücks dargestellt, bei dem den über die beiden getrennten Injektormischsysteme erzeugten Gasmischungen eine vierte Brennkomponente über einen zweiten Radial-Injektorspalt 7 zugeführt wird.

Dazu setzen sich die ersten Zuleitungskanäle 1 über die ersten Injektordüsenbohrungen 11 und den ersten Radialinjektorspalt 6 in ersten Injektormischdüsenbohrungen 16 fort, die in den zweiten Radial-Injektorspalt 7 münden. Die dritten Zuleitungskanäle 3 setzen sich über die dritten Injektordüsenbohrungen 13 und den ersten Radialinjektorspalt 6 in dritten Injektormischdüsenbohrungen 17 fort, die dann ebenfalls in den zweiten Radial-Injektorspalt 7 münden. Diesem zweiten Radial-Injektorspalt 7 wird über vierte Zuleitungen 4 eine vierte Brennkomponente zugeführt. Sowohl die ersten als auch die dritten Injektormischdüsenbohrungen 16 und 17 setzen sich in ersten und dritten Mischbohrungen 18 und 19 fort, die unabhängig voneinander sind.

Dieses Injektor-Mundstück 10 erlaubt die Innenmischung von drei verschiedenen Brenngasen mit Außenzumischung von einem Hilfsverbrennungsgas und/oder Innenzumischung von Stickstoff in ein Hilfsverbrennungsgas, wie z.B. Sauerstoff, das nun als beliebige Sauerstoff-Stickstoff-Mischung zur Regelung der Flammentemperatur, Zünd- und Verbrennungsgeschwindigkeit außen zugemischt werden kann.

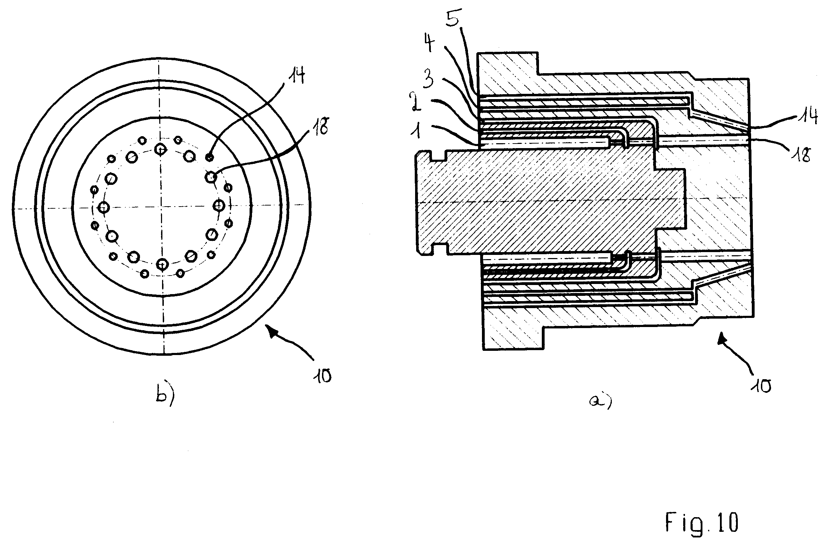

Figur 10 zeigt eine Ausführungsform eines Injektormundstücks 10, die im wesentlichen der in Figur 1 dargestellten Ausführungsform entspricht, wobei hier jedoch keine Zentralbohrung vorliegt. Es sind jedoch vierte und fünfte Zuleitungskanäle 4 und 5 für Hilfsverbrennungsgase vorgesehen, die in einen Ringspalt 8 münden, dort gemischt werden und dann über Austrittsbohrungen 14 unabhängig von den übrigen Brennkomponenten zur Frontfläche des Injektor-Mundstücks 10 geführt sind.

Das vorgenannte System ist dazu geeignet, drei verschiedene Brenngase nach dem Doppel-Injektor-Mischsystem zu mischen, welches bereits in Verbindung mit der Figur 1 erläutert wurde. Das Hilfsverbrennungsgas Sauerstoff und/oder ein Sauerstoff-Stickstoff-Gemisch wird außerhalb des Injektor-Mundstücks stirnseitig zugemischt.

Dieses Injektor-Mundstück kann beispielsweise für Sonderanwendungen, zur Herstellung einer hochenergetischen Hochgeschwindigkeitsflamme genutzt werden, wobei dem Brenngasgemisch durch Außenmischung ein Hilfsverbrennungsgas zugesetzt wird.

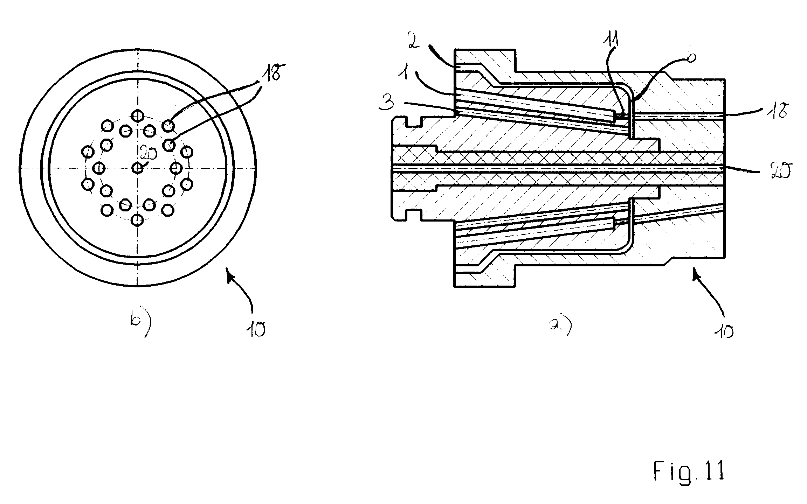

In Figur 11 ist schließlich eine Ausführungsform eines Injektor-Mundstücks 10 dargestellt, bei dem die dritte Brennkomponente über dritte Zuleitungskanäle 3 dem ersten Radial-Injektorspalt 6 zugeführt wird.

Über die ersten Zuleitungskanäle 1 wird ein Hilfsverbrennungsgas zugeführt, das in den ersten Injektordüsenbohrungen 11 auf Schallgeschwindigkeit beschleunigt wird und mit hoher Strömungsgeschwindigkeit den ersten Radial-Injektorspalt 6 durchströmt, der mit einem beliebigen Brenngas über die zweiten Zuleitungskanäle 2 gespeist wird. Die hochbeschleunigten Gasströme, die aus den Injektordüsenbohrungen 11 austreten und in die gegenüberliegenden Mischbohrungen 18 münden, reißen Brenngas aus dem ersten Radial-Injektorspalt 6 mit, so daß ein Brenngas-Sauerstoff-Gemisch an der Frontfläche des Injektor-Mundstücks austritt. Über die dritten Zuleitungskanäle 3, die ebenfalls in den ersten Radial-Injektorspalt 6 münden, kann beispielsweise Stickstoff zugespeist werden, um im Falle einer Rückzündung, bei negativer Ausströmgeschwindigkeit des Brenngas-Sauerstoff-Gemisches die im Mischbereich entstehende Flamme durch Zusatz von Stickstoff zu ersticken.

Ein weiterer Vorteil dieser Technologie besteht darin, daß durch Zumischung von beliebigen Stickstoffanteilen in das Brenngas die Flammentemperatur, die Zünd- und Verbrennungsgeschwindigkeit, sowie die Primärflammenleistung der gezündeten Brenngas-Hilfsverbrennungsgas-Mischung beliebig manipuliert werden kann. So kann beispielsweise die Flammentemperatur eines gezündeten Acetylen-Sauerstoff-Gemisches bei einem Mischverhältnis von 1 : 1,4 von 3165°C durch Zumischen von Stickstoff auf ca. 50 %, nämlich auf eine Temperatur kleiner 2000°C gesenkt werden.

Die vorgenannten Möglichkeiten lassen sich sehr vorteilhaft beim HCOV-Spritzen, von niedrig schmelzenden Spritzwerkstoffen, wie z.B. Aluminium, Zink und Kupfer-Werkstoffen anwenden.

Abschließend sei hervorgehoben, daß die erfindungsgemäße Lehre nicht auf die voranstehend erörterten Ausführungsbeispiele beschränkt ist. Die erfindungsgemäße Lehre läßt sich vielmehr auch bei anders ausgestalteten Injektor-Mundstücken realisieren.

### Bezugszeichenliste

- 1: Zuleitungskanäle
- 2: Zuleitungskanäle
- 3: Zuleitungskanäle
- 4: Zuleitungskanäle
- 5: Zuleitungskanäle
- 6: erster Radial-Injektorspalt
- 7: zweiter Radial-Injektorspalt
- 8: Ringspalt
- 9: Injektormischbohrungen
- 10: Injektor-Mundstück
- 11: Injektordüsenbohrungen (erste)
- 12: -
- 13: Injektordüsenbohrungen (dritte)
- 14: Austrittsbohrungen
- 15: -
- 16: Injektormischdüsenbohrungen (erste)
- 17: Injektormischdüsenbohrungen (dritte)
- 18: Mischbohrungen (erste)
- 19: Mischbohrungen (dritte)
- 20: Zentralbohrung
- 21: Zentral-Injektorspalt
- 22: Zentralmischbohrung
- 23: -
- 24: -
- 25: Brennkammer
- 26: Übergangskonus
- 27: Expansionsdüse
- 28: -

## Patentansprüche

1. Injektor-Mundstück (10) für Brennaggregate zum Mischen von Brennkomponenten, insbesondere Brenngasen, Hilfsverbrennungsgasen und ggf. flüssigen Brennstoffen, mit Zuleitungskanälen (1, 2, 3) für die einzelnen Brennkomponenten, wobei die Zuleitungskanäle (1, 2, 3) der einzelnen Brennkomponen-ten vorzugsweise jeweils durch eine Gruppe von auf einem Kreis angeordneten Achsialbohrungen gebildet sind und die den einzelnen Brennkomponenten zugeordneten Gruppen von Achsialbohrungen auf konzentrischen Kreisen angeordnet sind,
**dadurch gekennzeichnet**,
daß zum Mischen von mindestens zwei Brennkomponenten die einer ersten Brennkomponente zugeordneten ersten Zuleitungskanäle (1) in erste Injektordüsenbohrungen (11) mit vermindertem Querschnitt münden,
welche wiederum in einen ersten Radial-Injektorspalt (6) münden, daß die der zweiten Brennkomponente zugeordneten zweiten Zuleitungskanäle (2) ebenfalls in den ersten Radial-Injektorspalt (6) münden,
und daß mindestens für eine weitere dritte Brennkomponente dritte Zuleitungskanäle (3) vorgesehen sind, mit denen eine Innen- und/oder Außenmischung der ersten, zweiten und mindestens dritten Brennkomponente realisiert ist.

2. Injektor-Mundstück (10) nach Anspruch 1,
**dadurch gekennzeichnet**,
daß sich die ersten Zuleitungskanäle (1) über die ersten Injektordüsenbohrungen (11) und den ersten Radial-Injektorspalt (6) in ersten Injektormischdüsenbohrungen (16) fortsetzen, welche in einen zweiten Radial-Injektorspalt (7) münden, und
daß die der dritten Brennkomponente zugeordneten dritten Zuleitungskanäle (3) ebenfalls in den zweiten Radial-Injektorspalt (7) münden.

3. Injektor-Mundstück (10) nach Anspruch 1,
**dadurch gekennzeichnet**,
daß die der dritten Brennkomponente zugeordneten dritten Zuleitungskanäle (3) ebenfalls in den ersten Radial-Injektorspalt (6) münden.

4. Injektor-Mundstück (10) nach einem der Ansprüche 1 bis 3,
**dadurch gekennzeichnet**,
daß sich die ersten Zuleitungskanäle (1) über den ersten und ggf. zweiten Radial-Injektorspalt (6, 7) in ersten Mischbohrungen (18) fortsetzen.

5. Injektor-Mundstück (10) nach Anspruch 1,
**dadurch gekennzeichnet**,
daß die der dritten Brennkomponente zugeordneten dritten Zuleitungskanäle (3) in dritte Injektordüsenbohrungen (13) mit vermindertem Querschnitt münden.

6. Injektor-Mundstück (10) nach Anspruch 5,
**dadurch gekennzeichnet**,
daß die dritten Injektordüsenbohrungen (13) in den ersten Radial-Injektorspalt (6) münden.

7. Injektor-Mundstück (10) nach Anspruch 5 oder 6,
**dadurch gekennzeichnet**,
daß die ersten und die dritten Zuleitungskanäle (1, 3) gegeneinander versetzt auf den jeweiligen Kreisen angeordnet sind.

8. Injektor-Mundstück (10) nach einem der Ansprüche 5 bis 7,
**dadurch gekennzeichnet**,
daß sich die ersten Zuleitungskanäle (1) über die ersten Injektordüsenbohrungen (11) und den ersten Radial-Injektorspalt (6) in ersten Injektormischdüsenbohrungen (16) fortsetzen und in einen zweiten Radial-Injektorspalt (7) münden und
daß sich die dritten Zuleitungskanäle (3) über die dritten Injektordüsenbohrungen (13) und den ersten Radial-Injektorspalt (6) in dritten Injektormischdüsenbohrungen (17) fortsetzen, welche unabhängig von den ersten Injektormischdüsenbohrungen (16) sind und in den zweiten Radial-Injektorspalt (7) münden und
daß die einer vierten Brennkomponente zugeordneten vierten Zuleitungen (4) ebenfalls in den zweiten Radial-Injektorspalt (7) münden.

9. Injektor-Mundstück (10) nach Anspruch 5,
**dadurch gekennzeichnet**,
daß die dritten Injektordüsenbohrungen (13) in dritte Injektormischbohrungen (9) mit vergrößertem Querschnitt münden und
daß die einer vierten Brennkomponente zugeordneten vierten Zuleitungen (4) ebenfalls in die dritten Injektormischbohrungen (9) münden.

10. Injektor-Mundstück (10) nach Anspruch 5,
**dadurch gekennzeichnet**,
daß die dritten Injektordüsenbohrungen (13) in einen zweiten Radial-Injektorspalt (7) münden und
daß die einer vierten Brennkomponente zugeordneten vierten Zuleitungskanäle (4) in den zweiten Radial-Injektorspalt (7) münden.

11. Injektor-Mundstück (10) nach einem der Ansprüche 5 bis 10,
**dadurch gekennzeichnet**,
daß sich die ersten Injektordüsenbohrungen (11) bzw. Injektormischdüsenbohrungen (16) in ersten Mischbohrungen (18) fortsetzen und
daß sich die dritten Injektordüsenbohrungen (13) bzw. Injektormischdüsenbohrungen (17) in dritten Mischbohrungen (19) fortsetzen, welche unabhängig von den ersten Mischbohrungen (18) sind.

12. Injektor-Mundstück (10) nach einem der Ansprüche 1 bis 11,
**dadurch gekennzeichnet**,
daß die der dritten oder einer weiteren Brennkomponente zugeordneten dritte oder weitere Zuleitungskanäle (3) als Zerstäuberdüsenbohrungen für flüssigen Brennstoff ausgebildet sind.

13. Injektor-Mundstück (10) nach Anspruch 12,
**dadurch gekennzeichnet**,
daß die Zerstäuberdüsenbohrungen bezüglich der Achse des Injektor-Mundstücks (10) achsial und/oder fokussierend ausgebildet sind.

14. Injektor-Mundstück (10) nach einem der Ansprüche 1 bis 13,
**dadurch gekennzeichnet**,
daß mindestens eine weitere Brennkomponente über weitere Zuleitungskanäle unabhängig von der ersten, zweiten und dritten Brennkomponente zur Frontfläche des Injektor-Mundstücks (10) geführt ist.

15. Injektor-Mundstück (10) nach Anspruch 14,
**dadurch gekennzeichnet**,
daß die der mindestens einen weiteren Brennkomponente zugeordneten weiteren Zuleitungskanäle (4) in einen Ringspalt (8) münden, von dem ausgehend Austrittsbohrungen (14) an die Frontfläche des Injektor-Mundstücks (10) geführt sind.

16. Injektor-Mundstück (10) nach einem der Ansprüche 1 bis 15,
**dadurch gekennzeichnet**,
daß die Mischbohrungen (18, 19) frontseitig achsial und/oder fokussierend orientiert sind.

17. Injektor-Mundstück (10) nach einem der Ansprüche 1 bis 16,
**dadurch gekennzeichnet**,
daß die Austrittsbohrungen (14) frontseitig achsial und/oder fokussierend orientiert sind.

18. Injektor-Mundstück (10) nach einem der Ansprüche 1 bis 17,
**dadurch gekennzeichnet**,
daß eine Zentralbohrung (20) vorgesehen ist.

19. Injektor-Mundstück (10) nach Anspruch 18,
**dadurch gekennzeichnet**,
daß die Zentralbohrung (20) in einen Zentral-Injektorspalt (21) mündet,
daß die einer Brennkomponente zugeordneten Zuleitungskanäle (5) ebenfalls in den Zentral-Injektorspalt (21) münden und
daß sich die Zentralbohrung (20) über den Zentral-Injektorspalt (21) in einer Zentral-Mischbohrung (22) fortsetzt.
